# EUROPEAN PATENT SPECIFICATION

(11) **EP 1 762 462 B1**
(45) Date of publication and mention of the grant of the patent: **28.05.2008**
(21) Application number: 06018794.5
(22) Date of filing: 07.09.2006
(51) Int. Cl.: B62D 1/184, B62D 1/19

(54) **Steering apparatus**
Lenkeinrichtung
Appareil de direction

(30) Priority: 08.09.2005 JP 2005260444; 08.09.2005 JP 2005261022
(43) Date of publication of application: 14.03.2007
(73) Proprietor: NSK Ltd., Tokyo 141-8560 (JP)
(72) Inventor: Shimoda, Mitsuo, Maebashi-shi Gunma 371-8528 (JP); Tsunoda, Tomoyuki, Maebashi-shi Gunma 371-8528 (JP); Koike, Yasuo, Maebashi-shi Gunma 371-8528 (JP)
(74) Representative: Grünecker, Kinkeldey, Stockmair & Schwanhäusser Anwaltssozietät

(56) References cited:
- EP-A1- 0 802 104
- WO-A-20/05021355

## Description

### BACKGROUND OF THE INVENTION

### 1. Field of the Invention

The present invention relates to a steering apparatus and, more particularly, to a steering apparatus which is enabled to adjust a telescopic position (anteroposterior position) and a tilt position (tilt angle) of a steering wheel according to the physique and the posture of each driver and which has a clamp unit adapted to use a plurality of friction plates and to firmly clamp a steering column to prevent the column from moving in an anteroposterior direction or in a tilt direction. A steering apparatus according to the preamble of any of claims 1 to 5 is known from WO 2005/021355.

Further, the present invention also relates to an improvement of an apparatus of adjusting the position of a steering wheel, which is enabled to adjust the height position and the anteroposterior position of the steering wheel used for steering an automobile.

### 2. Description of the Background Art

Hitherto, a position adjusting apparatus of adjusting the position of a steering wheel has been used to change the height position and the anteroposterior position of a steering wheel according to the physique and the posture of each driver. Generally, such a position adjusting apparatus employs a structure in which the frictional force generated between a fixed side bracket supportingly fixed to a vehicle body and a displacement side bracket fixedly provided at a steering column is adjusted according to an operation of an adjustment lever. That is, when the position of the steering wheel is adjusted, the magnitude of the frictional force acting between both the brackets is reduced by operating the adjustment lever in a predetermined direction. In contrast, when the steering wheel is held at an adjusted position, the magnitude of the frictional force is increased by operating the adjustment lever in a direction opposite to the predetermined direction. In the case of such a structure, to increase the magnitude of a force adapted to hold the steering wheel at the adjusted position without increasing an operating amount of the adjustment lever, preferably, a friction area is increased. In view of such circumstances, Japanese Patent Unexamined Publication JP-A-10-35511 and Japanese Utility Model Examined Publication JP-UM-B-62-19483 describe structures in each of which the frictional area is increased by overlapping a plurality of friction members.

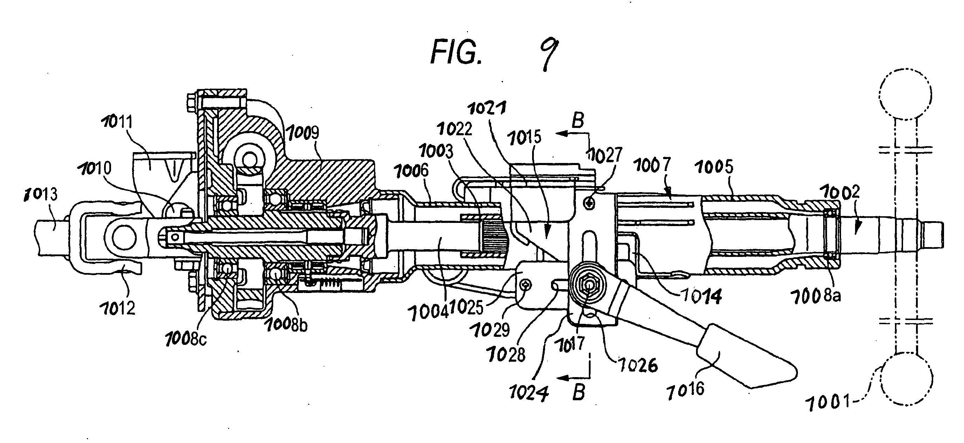

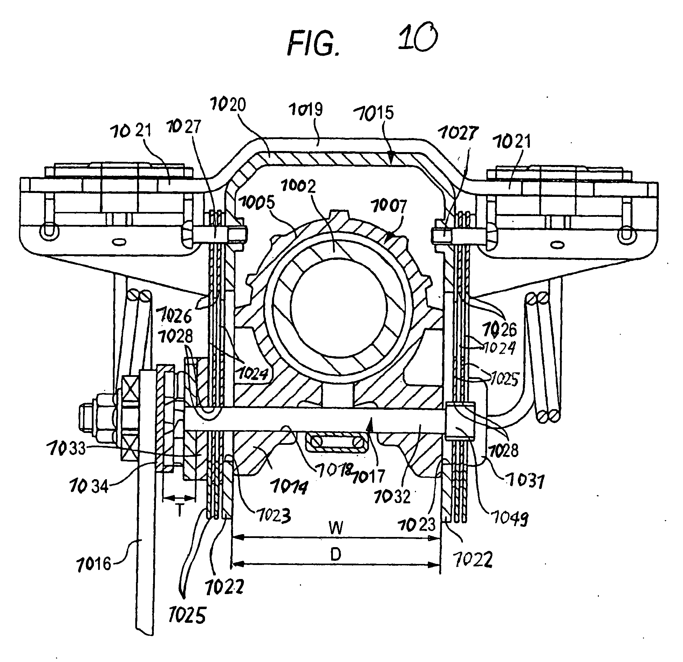

FIGS. 9 and 10 illustrate an example of the apparatus of adjusting the position of the steering wheel, which is configured to increase the frictional area utilizing a plurality of friction members and to increase the magnitude of a force that holds the steering wheel 1001 at the adjusted position. This structure enables the adjustment of the up/down position and the anteroposterior position of the steering wheel 1001.
The steering wheel 1001 is supported by and is fixed to a rear end portion (top portion) of a steering shaft 1002 provided in an inclined condition in which the steering shaft 1002 becomes higher in a rearward direction (rightward direction, as viewed in FIG. 9). A front end portion of an outer shaft 1003 provided at a rear half part (right half part, as viewed in FIG. 9) of the steering shaft 1002 is spline-engaged with a rear end portion of an inner shaft 1004 provided at a front half part (left half part, as viewed in FIG. 9) thereof to thereby enable the adjustment of the anteroposterior position of the outer shaft 1003. Such a steering shaft 1002 is only rotatably supported (in a state in which the axial displacement of the steering shaft 1002 with respect to a steering column 1007 is prevented) by roller bearings 1008a, 1008b, and 1008c, such as deep-grooved ball bearings, in the steering column 1007 configured by telescopically (or extensibly) combining an outer column 1005 with an inner column 1006.

Also, an electric power steering apparatus, which is adapted so that an auxiliary steering force is given to the steering shaft 1002 by an electric motor, is incorporated into the illustrated example. Thus, the electric motor is fixed to a housing 1009 that is fixed to the front end portion of the steering column 1007. Also, a gear transmission mechanism adapted to transmit an output of this electric motor to the steering shaft 1002 is incorporated thereinto. Incidentally, hitherto, the structure of the electric power steering apparatus has widely been known and is not an essential feature of the invention (the invention can be carried out regardless of the presence and the structure of the power steering apparatus). Accordingly, the detail description of the structure of the electric power steering apparatus is omitted herein. The housing 1009 is swingably supported by a part of a vehicle body through a transverse shaft 1010 and a rocking bracket 1011. A part of the front end portion of the steering shaft 1002, which is projected from the housing 1009, is connected to an intermediate shaft 1013 through a universal joint 1012. The intermediate shaft 1013 is adapted by a spline engagement portion, which is provided at a middle portion thereof, to be extensible over the entire length thereof. Thus, the intermediate shaft 1013 absorbs an anteroposterior displacement of the universal joint 1012, which is caused by a swinging motion of the steering column 1007.

With the above configuration, the height position of the steering wheel 1001 can be adjusted according to a swinging displacement around the transverse shaft 1010. Also, the adjustment of the anteroposterior position of the steering wheel 1001 can be achieved by telescopic motions of the steering shaft 1002 and the steering column 1007. To fix the steering wheel 1001 at the adjusted position, the displacement side bracket 1014 and the fixed side bracket 1015 are fixed to a part of the steering column 1007 and the vehicle body, respectively. Both the brackets 1014 and 1015 are detachably engaged with each other by operating a position adjustment lever 1016.

In the illustrated example, the displacement side bracket 1014 is provided to the front end of the bottom surface of the outer column 1005, which constitutes the steering column 1007 and is an aluminum alloy casting (including a die casting), integrally with the outer column 1005. An anteroposterior elongated hole 1018, through which a tension rod 1017 corresponding to a rod-like member to be described later is inserted, is formed in the displacement bracket 1014 to penetrate through the displacement side bracket 1014 in a lateral direction (width direction).

Additionally, the fixed side bracket 1015 is constructed by connecting an upper bracket element 1009 and a lower bracket element 1020, each of which is formed by bending a metal plate, through welding to thereby fix the upper bracket element 1009 and the lower bracket element 1020 to each other. Between the upper bracket element 1009 and the lower bracket element 1020, the upper bracket element 1009 is used for fixing the fixed side bracket 1015 to the vehicle body that supports the bracket 1015. The upper bracket element 1009 has a pair of left and right mounting plate portions 1021, 1021, which are supported by and are fixed to the vehicle body by utilizing a structure known in the technical field of an automotive steering apparatus and which are enabled to frontwardly drop off at a secondary collision.

Additionally, the lower bracket element 1020 has a pair of support plate portions 1022, 1022 hung vertically from the bottom surface of the upper bracket element 1019. The distance D between the inner side surfaces (side surfaces opposed to each other) of both the support plate portions 1022, 1022 is set to be substantially equal to the distance W between the outer surfaces of the displacement side bracket 1014 (that is, the width of the displacement bracket 1014). Also, up/downwardly elongated holes 1023, 1023 (preferably, shaped like a part of a circular arc around the transverse shaft 1010), through which the tension rod 1017 is inserted, are formed at places, which are aligned with each other, in both the support plate portions 1022, 1022, respectively. A plurality of first friction plates 1024 and a plurality of second friction plates 1025 are disposed on the outer surface portions of both the support plate portion 1022, 1022.

Among the first friction plates 1024 and the second friction plates 1025, the first friction plates 1024, 1024 disposed in the up-down direction along the outer side surfaces of both the support plate portions 1022, 1022 are provided with first elongated holes 1026, 1026 aligned with the holes 1023, 1023 that are elongated in the up/down direction and that are formed in both the support plate portions 1022, 1022, respectively. The top portion of each of the first friction plates 1024, 1024, which has such a structure, is connected to and is supported by the outer surface of the top part of an associated one of both the support plate portions 1022, 1022 by an associated one of first setscrews 1027, 1027. Therefore, each of the first friction plates 1024, 1024 does not displace in the up/down direction.

Meanwhile, second elongated holes 1028, 1028 aligned with the anteroposterior elongated hole 1018 are formed in the second friction plates 1025, 1025 disposed in the anteroposterior direction along the displacement side bracket 1014. The top portion of each of the second friction plates 1025, 1025, which has such a structure, is connected to and is supported by the outer surface of the top part of the displacement side bracket 1014 by second setscrews 1029. Therefore, each of the first friction plates 1024, 1024 does not displace in the up/down direction. The second friction plates 1025, 1025 and the first friction plates 1024, 1024 are configured so that the second friction plate 1025 and the first friction plate 1024 are alternately disposed to overlap with each other.

The tension rod 1017, which will be described later, is inserted through the anteroposterior elongated hole 1018, both the up/downwardly elongated holes 1023, 1023, the first elongated holes 1026, and the second elongated holes 1028. An outward flange-like guard portion 1031 is formed at a base portion (right-end portion, as viewed in FIG 10) of the tension rod 1017. The engagement portion 1049 formed closer to the base of the rod portion 1032 is engaged with one 1023 (right-side one, as viewed in FIG 10) of the up/downwardly elongated holes so that the engagement portion 1049 can displace only in a direction along the elongated hole 1023 (that is, can only move up and down). Thus, the shape of the cross-section of the engagement portion 1049 is set to have a noncircular shape, such as an oval shape, which is brought into slide contact with an inner edge of the up/downwardly elongated hole 1023 and has a rectilinear part that prevents the engagement portion 1049 from rotating in the up/downwardly elongated hole 1023.

Meanwhile, a pressing plate 1033 is fitted onto and a pressing cam mechanism 1034 is provided at a part provided closer to an end of an intermediate portion of the rod portion 1032 to be projected from the other support plate portion 1022 (or the left-side support plate portion, as viewed in FIG 10) and the first friction plate 1024 and the second friction plate 1025 disposed on the outer surface part of the support plate portion 1022. The cam mechanism 1034 and the tension rod 1017 constitute a pressing member which will be described later. The cam mechanism 1034 has a structure that is known in the technical field of an automotive steering apparatus and that is enabled to increase and decrease the axial dimension T according to an operation of the position adjustment lever 1016. In a state in which the axial dimension T is increased by turning the position adjustment lever 1016 in a predetermined direction, the distance between one side surface of the pressing plate 1033 and an inner surface of the guard portion 1031 is decreased to thereby increase a frictional force acting between opposed surfaces which are present between both of the one side surface and the inner surface and are friction-engaged with each other.

That is, in this state, all of the abutting pressure between each side surface of the displacement side bracket 1014 and an associated one of the inner surfaces of both the support plate portions 1022, 1022, the abutting pressure between each outer surface of both the support plate portions 1022, 1022 and an associated one of inner surfaces of the innermost second friction plates 1025, 1025, the abutting pressure between the side surfaces of each first friction plate 1024 and the adjacent second friction plate 1025, the abutting pressure between each outer surface of the outermost first friction plates 1024, 1024 and one of the one side surface of the pressing plate 1033 and the inner surface of the guard portion 1031 are increased. In this state, a total of frictional forces acting between the friction engagement portions is sufficiently large. Consequently, the magnitude of a supporting force of the displacement side bracket 1014, which supports the fixed side bracket 1015, is sufficiently large. Thus the position of the steering wheel 1001 can be maintained by the force having a sufficiently large magnitude.

In contrast, when the position of the steering wheel 1001 is adjusted, the axial dimension T is decreased by turning the position adjustment lever 1016 in a direction opposite to the predetermined direction. Thus, the distance between the one side surface of the pressing plate 1033 and the inner surface of the guard portion 1031 is increased. In this state, the magnitude of the frictional force acting between the opposed surfaces, which are present between the one side surface and the inner surface and are friction-engaged with each other, is reduced or lost. Consequently, the position of the displacement side bracket 1014 can be adjusted in the up-down direction and in the anteroposterior direction with respect to the fixed side bracket 1015. Thus, after the position of the steering wheel 1001 is adjusted to a desired position, the position adjustment lever 1016 is turned in the predetermined direction. Consequently, the steering wheel 1001 is held at the desired position.

In the case of the structure shown in FIGS. 9 and 10, to assure the strength thereof for holding the steering wheel at the adjusted position, a plurality of the first friction plates 1024 and a plurality of the second friction plates 1025 are disposed on each of the outer surface portions of both the support plate portions 1022, 1022 to thereby assure the frictional area. A plurality of flat-plate-like first friction plates 1024, which are independent of one other, and a plurality of flat-plate-like second friction plates 1025, which are independent of one another, are provided on each outer surface of both the support plate portions 1022, 1022. That is, in the case of the illustrated example, a total of 4 sheets friction plates including 2 sheets of first friction plates 1024 and 2 sheets of second friction plates 1025 are provided on the outer surface part of each of the support plate portions 1022, 1022. A total of 8 sheets of friction plates are provided on the outer surface parts of the support plate portions 1022, 1022. An end portion of each of friction plates 1024 and 1025 is fastened by an associated one of a first setscrew 1027 and a second setscrew 1029 and is supported against both the support plate portions 1022, 1022 (or the fixed side bracket 1015) or against the displacement side bracket 1014. However, in a state before the tension rod 1017 is inserted into the first elongated holes 1026 or the second elongated holes 1028, each of the friction plates 1024 and 1025 can be rocked or turned around an associated one of the first setscrew 1027 and the second setscrew 1029.

When the apparatus of adjusting the position of the steering wheel is assembled, it is necessary to insert the tension rod 1017 not only into the anteroposterior elongated hole 1018 and the up/downwardly elongated hole 1023 but into the first elongated holes 1026 and the second elongated holes 1028. When such an insertion operation is performed, it is necessary to align the first elongated holes 1026 and the second elongated holes 1028. However, in a case when the friction plates 1024 and 1025 are rocked or turned independent of one another, it is necessary to perform such an alignment operation on each of the friction plates 1024 and 1025. Thus, the operation is complicated. Especially, in the case of the second friction plates 1025, 1025 provided along the outer surface of the displacement side bracket 1014, each of the second friction plates 1025, 1025 swings around the second setscrew 1029 downwardly largely (90 degrees with respect to a normal position) before the tension rod 1017 is inserted through the second elongated holes 1028, 1028. Thus, operations of aligning the second elongated holes 1028, 1028 and of aligning the second elongated hole 1028, 1028 with the first elongated holes 1026, 1026 are particularly complicated. Consequently, the operation of fabricating the apparatus of adjusting the position of the steering wheel is prevented from being streamlined. Thus, the cost of the apparatus of adjusting the position of the steering wheel is difficult to reduce. JP-UM-B-62-19483 describes a structure in which base portions of a plurality of friction plates are overlapped with one another through spacers and in which the base portions of the plurality of friction plates and the spacers are fixed by welding. Incidentally, in the case of such a structure described by JP-UM-B-62-19483, it is necessary to perform welding in a state in which the base portions of the friction plates and the spacers are appropriately overlapped with one another. Thus, a manufacturing operation is complicated, so that cost reduction is difficult to achieve.

In addition, the column is firmly clamped to the vehicle-body-mounted bracket by the frictional forces of the friction plates. Thus, even when an impact force is applied to the column at collision of a vehicle, the column can move only a distance corresponding to a minute gap from each of the friction plates to the bolt or pin. Consequently, there is a fear that the magnitude of an impact force applied to a driver at the collision is large.

### SUMMARY OF THE INVENTION

A problem that the invention is to solve is to provide a steering apparatus which has a clamp unit adapted to firmly clamp a column to a vehicle-body-mounted bracket using a friction plate, and which is adapted so that when an impact force, whose magnitude is larger than a predetermined value, acts upon the column at collision of a vehicle, the column moves in a telescopic direction or in a tilt direction to alleviate impact at the collision.

According to a first aspect of the invention, there is provided a steering apparatus comprising:
a vehicle-body-mounted bracket mountable in a vehicle body;
a steering shaft to which a steering wheel is attached;
a column which is supported by the vehicle-body-mounted bracket so that a position thereof is adjustable, and rotatably supports the steering shaft; and
a clamp unit that clamps the column to the vehicle-body-mounted bracket through a first friction plate and a second friction plate, which slide-contact with the first friction plate, at the desired position; and
a connection member connecting the first and second tilt friction plates with at least one of the vehicle-body-mounted bracket and the column,
wherein when an impact force, whose magnitude is equal to or more than a predetermined value, acts at a collision, connection of the first friction plate to at least one of the vehicle-body-mounted bracket and the column is canceled.

According to a second aspect of the invention, there is provided a steering apparatus comprising:
a vehicle-body-mounted bracket mountable in a vehicle body;
a steering shaft to which a steering wheel is attached;
a column which is supported by the vehicle-body-mounted bracket so that a tilt position thereof is adjustable, and rotatably supports the steering shaft; and
a clamp unit that clamps the column to the vehicle-body-mounted bracket through a tilt friction plate at a desired tilt position; and
a connection member connecting the tilt friction plate with the vehicle-body-mounted bracket,
wherein when an impact force, whose magnitude is equal to or more than a predetermined value, acts at a collision, connection of the tilt friction plate to the vehicle-body-mounted bracket is canceled, so that the column moves together with the tilt friction plate in a tilt direction relative to the vehicle-body-mounted bracket.

According to a third aspect of the invention, there is provided a steering apparatus comprising:
a vehicle-body-mounted bracket mountable in a vehicle body;
a steering shaft to which a steering wheel is attached;
a column which is supported by the vehicle-body-mounted bracket so that a telescopic position thereof is adjustable, and rotatably supports the steering shaft; and
a clamp unit that clamps the column to the vehicle-body-mounted bracket through a telescopic friction plate at a desired telescopic position; and
a connection member connecting the telescopic friction plate with the column,
wherein when an impact force, whose magnitude is equal to or more than a predetermined value, acts at a collision, connection of the telescopic friction plate to the column is canceled, so that the column moves in a telescopic direction relative to the vehicle-body-mounted bracket.

According to a fourth aspect of the invention, there is provided a steering apparatus comprising:
a vehicle-body-mounted bracket mountable in a vehicle body;
a steering shaft to which a steering wheel is attached;
a column which is supported by the vehicle-body-mounted bracket so that both of a tilt position and a telescopic position thereof are adjustable, and rotatably supports the steering shaft;
a clamp unit that clamps the column to the vehicle-body-mounted bracket through a tilt friction plate and a telescope friction plate at a desired tilt position and at a desired telescopic position;
a first connection member connecting the tilt friction plate with the vehicle-body-mounted bracket; and
a second connection member connecting the telescopic friction plate with the column,
wherein when an impact force, whose magnitude is equal to or more than a predetermined value, acts at a collision, connection of the tilt friction plate to the vehicle-body-mounted bracket is canceled, and connection of the telescope friction plate to the column is canceled, so that the column moves together with the tilt friction plate in a tilt direction relative to the vehicle-body-mounted bracket, and that the column moves in a telescopic direction relative to the vehicle-body-mounted bracket.

According to a fifth aspect of the invention, there is provided a steering apparatus comprising:
a vehicle-body-mounted bracket mountable in a vehicle body;
a steering shaft to which a steering wheel is attached;
a column which is supported by the vehicle-body-mounted bracket so that both of a tilt position and a telescopic position thereof arc adjustable, and rotatably supports the steering shaft;
a clamp unit that clamps the column to the vehicle-body-mounted bracket through a tilt friction plate and a telescope friction plate at a desired tilt position and at a desired telescopic position;
a first connection member connecting the tilt friction plate with the vehicle-body-mounted bracket; and
a second connection member connecting the telescopic friction plate with the column,
wherein when an impact force, whose magnitude is equal to or more than a predetermined value, acts at a collision, at least one of connection of the tilt friction plate to the vehicle-body-mounted bracket and connection of the telescope friction plate to the column is canceled, so that the column moves together with the tilt friction plate in a tilt direction relative to the vehicle-body-mounted bracket, or that the column moves in a telescopic direction relative to the vehicle-body-mounted bracket.

According to a sixth aspect of the invention, as set forth in one of the first to fifth aspect of the invention, at the collision, the connection of the tilt friction plate to the vehicle-body-mounted bracket or the connection of the telescope friction plate to the column is canceled by deformation of the tilt friction plate or the telescope friction plate.

According to a seventh aspect of the invention, as set forth in one of the first to fifth aspect of the invention, at the collision, the connection of the tilt friction plate to the vehicle-body-mounted bracket or the connection of the telescope friction plate to the column is canceled by deformation of the connection member.
According to an eighth aspect of the invention, as set forth in one of the first to fifth aspect of the invention, the vehicle-body-mounted bracket is mountable in the vehicle body so that when an impact force, whose magnitude is equal to or more than a predetermined value, acts at a secondary collision, the vehicle-body-mounted bracket is movable toward a front of the vehicle body.

The steering apparatus according to the invention is adapted so that the connection form one or both of the telescope friction plate and the tilt friction plate to the column or to the vehicle-body-mounted bracket is canceled when an impact force, whose magnitude is equal to or larger than a predetermined value, acts thereon, so that the column can move in the telescopic or tilt direction. Consequently, an impact force applied to a driver at collision can be mitigated.

### BRIEF DESCRIPTION OF THE DRAWINGS

FIG 1 is a general perspective view illustrating a state in which a steering apparatus according to the invention is mounted in a vehicle;
FIG 2(1) is a front view of a primary part of the first embodiment;
FIG 2(2) is an enlarged front view illustrating a connection part between a tilt friction plate and a bolt;
FIG 3 is a cross-sectional view taken on line A-A shown in FIG 2(1);
FIG 4 is a front view illustrating a state of the first embodiment of the steering apparatus according to the invention at a secondary collision;
FIGS. 5(1) to 5(4) are front views illustrating modifications of the tilt friction plate;
FIG 6 is a front view illustrating a primary part of a second embodiment of the steering apparatus according to the invention;
FIG 7 is a front view illustrating a primary part of a third embodiment of the steering apparatus according to the invention;
FIG 8 is a front view illustrating a primary part of a fourth embodiment of the steering apparatus according to the invention;
FIG 9 is a side view illustrating an example of a related structure; and
FIG 10 is an enlarged cross-sectional view taken on line B-B shown in FIG 9.

### DETAILED DESCRIPTION OF THE PREFERRED EMBODIMENTS

Hereinafter, embodiments of the invention are described below with reference to the accompanying drawings.

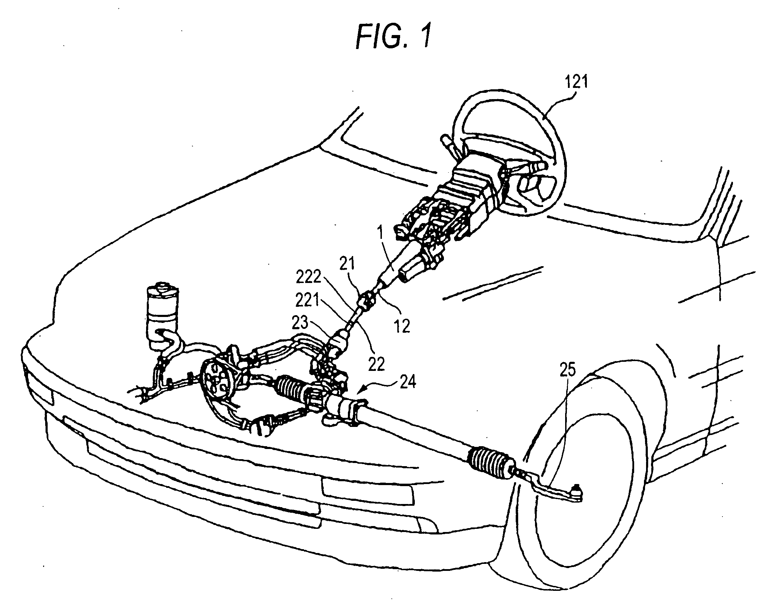

FIG 1 is a general perspective view illustrating a state in which a steering apparatus according to the invention is mounted in a vehicle.

As shown in FIG 1, a hollow cylindrical column 1 is mounted in a vehicle body. A steering shaft 12 is turnably and rotatably supported by the column 1. A steering wheel 121 is attached to the right end (at the rear side of the vehicle body) of the steering shaft 12. An intermediate shaft 22 is connected to the left end (at the front side of the vehicle body) of the steering shaft 12.

The intermediate shaft 22 includes a solid intermediate inner shaft 221, on which a male spline is formed, and a hollow cylindrical intermediate outer shaft 222 in which a female spline is formed. The male spline of the intermediate inner shaft 221 is extensibly (or slidably) fitted into the female spline of the intermediate outer shaft 222 to be able to transmit rotating-torque thereto.

The vehicle-body-rear-side of the intermediate outer shaft 222 is connected to the universal joint 21. The vehicle-body-front-side of the intermediate inner shaft 221 is connected to a universal joint 23. A pinion meshing with a rack (not shown) of a steering gear 24 is connected to the universal joint 23.

When a driver performs a rotating operation on the steering wheel 121, a turning force is transmitted to the steering gear 24 through the steering shaft 12, the universal joint 21, the intermediate shaft 22, and the universal joint 23. The turning force moves a tie rod 25 through a rack-and-pinion mechanism, so that a steering angle of wheels can be changed.

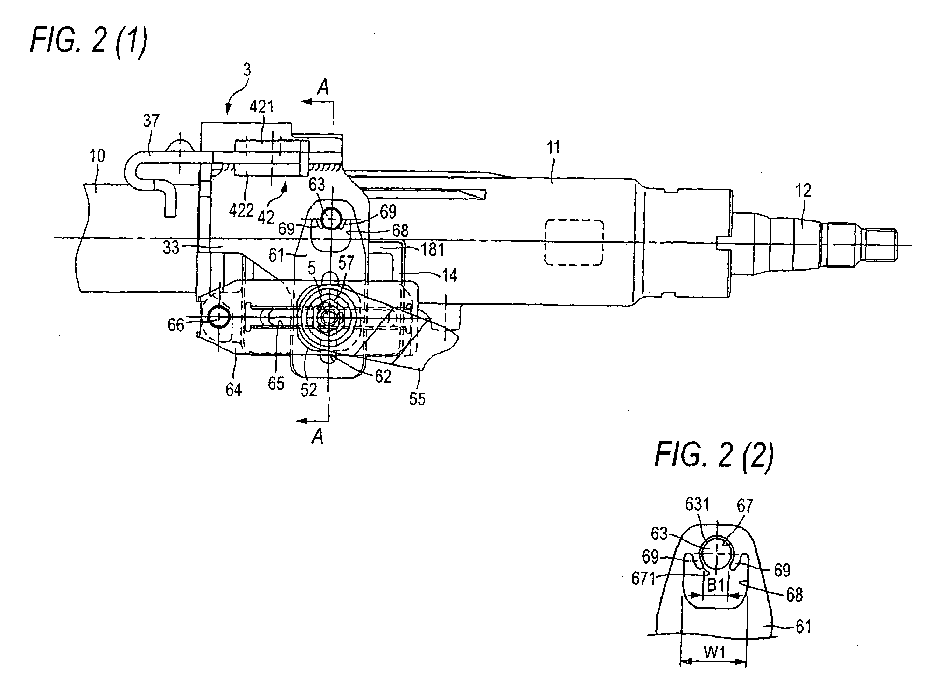

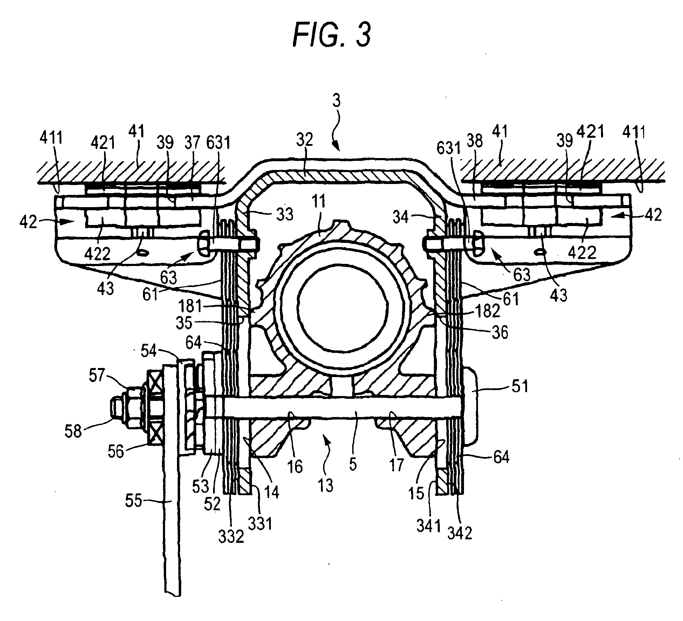

FIGS. 2(1) and 2(2) illustrate a steering apparatus that is a first embodiment of the invention. FIG 2(1) is a front view of a primary part of the first embodiment. FIG 2(2) is an enlarged front view illustrating a connection part between a tilt friction plate and a bolt. FIG 3 is a cross-sectional view taken on line A-A shown in FIG 2(1). As shown in FIGS. 2(1), 2(2) and 3, the column 1 includes a hollow cylindrical outer column (an upper column) 11 and an inner column (a lower column) 10 axially slidably fitted into the left side (the vehicle-body-front-side) of the outer column 11.

The steering shaft 12 is rotatably and rotatably supported by the outer column 11. The steering wheel 121 (see FIG 1) is fixed to the right end (the vehicle-body-rear-side) of the steering shaft 12.

In the embodiments of the invention, the outer column 11 is an aluminum die-cast component. However, the outer column 11 may be produced by welding a distance bracket to a steel tube. Alternatively, the outer column 11 may be a magnesium die-cast component.

A vehicle-body-mounted bracket 3 is mounted on the left side (the vehicle-body-front-side) of the outer column 11 to sandwich the outer column 11 from both the left side and the right side thereof. The vehicle-body-mounted bracket 3 is demountably mounted on the vehicle-body-front-side through an aluminum alloy capsule 42 fixed to a vehicle body 42.

When a driver collides with the steering wheel 12 at the secondary collision, so that a large impact force acts on the outer column 11, the vehicle-mounted bracket 3 is demounted from the capsule 42 toward the front side of the vehicle body and is guided by the inner column 10 and performs collapsing movement toward the front side of the vehicle body to thereby absorb impact energy. The vehicle-body-front-side (the left side, as viewed in the figure) of the inner column 10 is tiltably supported by the vehicle body 41 through a pivot pin (not shown).

As shown in FIG 3, the vehicle-body-mounted bracket 3 has a top plate 32, and side plates 33 and 34 extending downwardly from the top plate 32. A distance bracket 13 is downwardly projected from the outer column 11 and is formed integrally with the outer column 11. Side surfaces 14 and 15 of the distance bracket 13 are slidably in contact with inner surfaces 331 and 341 of side plates 33 and 34 of the vehicle-body-mounted bracket 3.

Also, ribs 181 and 182 extending in a direction of the center of an axis of the outer column 11 are formed on the upper peripheries of the side surfaces 14 and 15 of the distance bracket 13 in the outer column 11. The lateral width between the ribs 181 and 182 is set to be equal to that between the side surfaces 14 and 15. Therefore, the ribs 181 and 182 are also slidably in contact with the inner surfaces 331 and 341 of the side plates 33 and 34 so that the outer column 11 can strongly be fastened by the side plates 33 and 34 of the vehicle-body-mounted bracket 3. The ribs 181, 182 are formed at a position of which height is substantially the same as a center or axle of the outer column 11, as shown in Fig.3.
Although the width of the outer column 11 defined between the ribs 181, 182 are set the same as the width between the side surface 14, 15, the width of the outer column 11 defined between the ribs 181, 182 (width of the outer column 11 of which height is near the center of the axle thereof) may be set larger than width of the outer column 11 defined between the side surface 14, 15 thereof (width of the outer column 11 near a tightening rod 5). According to this structure, an attachment rigidity of the outer column 11 to the vehicle-body-mounted bracket 3 can be enhanced.

Tilt adjustment elongated-grooves 35 and 36 are formed in the side plates 33 and 34 of the vehicle-body-mounted bracket 3. Telescope adjustment elongated-grooves 16 and 17 extending in the lateral direction, as viewed in FIG 3, and also extending long in the direction of the center of axis of the outer column 11 are formed in the distance bracket 13.

A round-bar-like tightening rod 5 is inserted from the right side shown in FIG 3 through the tilt adjustment elongated-grooves 35 and 36 and the telescope adjustment elongated-grooves 16 and 17. A cylindrical head portion 51 is formed on the right end of the tightening rod 5.

A plurality (two in the present embodiment) of tilt friction plates (friction boards) 61 and 61, in each of which a tilt adjustment elongated-groove 62 (see FIG 2) penetrated by the tightening rod 5 is formed, are disposed on the outer surfaces 332 and 342 of the side plates 33 and 34 to extend in a tilt direction (the up/down direction, as viewed in FIGS. 2(1), 2(2), and 3). The tilt adjustment elongated-groove 62 formed in each of the tilt friction plates 61 and 61 has a length in the tilt direction, which is larger than the length in the tilt direction of each of the tilt adjustment elongated grooves 35 and 36 formed in the side plates 33 and 34.

A baffle projection (not shown) projecting to the head portion 51 is formed in the right tilt friction plate 61 brought into contact with the head portion 51 of the tightening rod 5, between the two tilt friction plates 61 at the side of the outer surface 342 of the side plate 34. This baffle projection is engaged with a concave groove (not shown) formed in the left end surface of the head portion 51 so as to prevent the tightening rod 5 from turning with respect to the tilt friction plate 61 and as to cause the tightening rod 5 to slide along the baffle projection at the adjustment of the tilt position of the outer column 11.

The top of each of the tilt friction plates 61, 61 is fixed to an associated one of the side plates 33, 34 by a bolt 63 serving as the connection member. A lower part of each of the tilt friction plates 61, 61 is constructed to be a free end, so that an occurrence of a tightening shift at tilt-tightening is allowed.

Similarly, a plurality (two in the present embodiment) of telescope friction plates (friction boards) 64, in each of which a telescope elongated groove (see FIG 2) penetrated by the tightening rod 5 is formed, are disposed on each of the tilt friction plates 61, 61 to extend in the telescopic direction (the lateral direction, as viewed in FIGS. 2(1) and 2(2)) so that the telescope friction plate 64 and the tilt friction plate 61 are alternately arranged.

The left end of each of the telescope friction plates 64, 64 is fixed to an associated one of the side surfaces 14, 15 by a bolt 66 serving as the connection member. Each of the telescope friction plates 64, 64 is configured so that the right end is a free end, and that an occurrence of a tightening shift at telescopic-tightening is allowed. According to the present embodiment, two tilt friction plates 61 and two telescope friction plates 64 are disposed. However, the number of the friction plates may be either 1 or 3 or more. According to the present embodiment, the tilt friction plate 61 and the telescope friction plate 64 are disposed on both sides of each of the side plate 33 and 34. However, the tilt friction plate 61 and the telescope friction plate 64 may be disposed on only one side of each of the side plate 33 and 34.

The length in a telescopic adjustment direction of the telescope adjustment elongated-groove 65 formed in each of the telescope friction plates 64, 64 is set to be longer than the length in a telescopic adjustment direction of the telescope adjustment elongated-groove 65 formed in each of the telescope friction plates 64, 64. This setting is preferable, because the outer periphery of the tightening rod 5 abuts against a groove end portion of each of the telescopic adjustment elongated grooves 16 and 17 of the distance bracket 13 and stops, so that the rigid feeling and the endurance are enhanced at a stopping end.
Although in this embodiment, the friction plates 61, 64 are provided outside of the vehicle-body-mounted bracket 3, however, the friction plates 61, 64 may be provided between the vehicle-body-mounted bracket 3 and the outer column 11.

FIG 2(2) enlargedly shows the connection portion between the tilt friction plate 61 and the bolt 63. As shown in FIG. 2(2), a connection hole 67, in the lower part of which an opening is formed to have a diameter slightly larger than a diameter of a shank portion 631 of the bolt 63, is formed in the top of the tilt friction plate 61. The shank portion 631 of the bolt 63 is fitted into the connection hole 67.

The width B1 of the lower opening portion 671 of the connection hole 67 is less than the diameter of the shank portion 631. A relief groove 68, whose width W1 is larger than the diameter of the shank portion 631, is formed in the lower part of the connection hole 67. Narrow claw portions 69, 69 are formed between the top of the relief groove 68 and the opening portion of the connection hole 67.

The tilt friction plate 61 holds the shank portion 631 of the bolt 63 in the connection hole 67 by using the claw portions 69, 69. Additionally, when an upward impact force, whose magnitude is equal to or higher than a predetermined value, acts upon the outer column 11, as viewed in FIGS. 2(1) and 2(2), at collision, the upward impact force acts upon the tilt friction plate 61, as viewed in FIGS. 2(1) and 2(2).

Then, the claw portions 69, 69 deform and are outwardly opened, so that the width B 1 of the opening portion 671 becomes larger than the diameter of the shank part 631. Consequently, the connection of the tilt friction plate 61 to the shank portion 631 is canceled. Accordingly, the outer column 11 can be moved together with the tilt friction plate 61 upwardly to the vehicle-body-mounted bracket 3 (to an upward side in the tilt direction), as viewed in FIGS. 2(1) and 2(2).

As shown in FIG 3, a washer 52, a fixed cam 53, a movable cam 54, an operating lever 55, a thrust bearing 56, and a nut 57 are fitted onto the periphery of the left end of the tightening rod 5 in this order. A female screw (not shown) formed in an inside diameter portion of the nut 57 is screwed onto a male screw 58 formed on the left end of the tightening rod 5. A cross-sectionally rectangular-shaped baffle portion (not shown) is formed on the periphery of the left end of the tightening rod 5. The fixed cam 53 is prevented by the baffle portion from turning with respect to the tightening rod 5.

Complementary inclined cam surfaces are formed on opposed end surfaces of the fixed cam 53 and the movable 54, which engage with each other. When the operating lever 55 connected to the left side surface of the movable cam 54 is manually operated, the movable cam 54 turns with respect to the fixed cam 53.

When the operating lever 55 is turned in a clamping direction, a raised portion of the inclined cam surface of the movable cam 54 runs on a raised portion of the inclined cam surface of the fixed cam 53, so that the tightening rod 5 is pulled to the left side, as viewed in FIG 3. Simultaneously, the fixed cam 53 is pushed to the right, as viewed in FIG 3.

The tilt friction plates 61, 61 and the telescope friction plates 64, 64 provided at the side of the right side plate 34 are pushed to the left side by the left end surface of the head portion 51 of the tightening rod 5. Also, the side plate 34 is inwardly deformed. The inner surface 341 of the side plate 34 is firmly pushed against the side surface 15 of the distance bracket 13 and the rib 182.

Simultaneously, the tilt friction plates 61, 61 and the telescope friction plates 64, 64 provided at the side of the left side plate 33 are pushed to the right side by the right end surface of the washer 52. The side plate 33 is inwardly deformed. The inner surface 331 of the side plate 33 is firmly pushed against the side surface 14 of the distance bracket 13 and the rib 181.

Thus, the distance bracket 13 of the outer column 11 and the ribs 181, 182 can be tilt-tightened and telescope-tightened to the vehicle-body-mounted bracket 3 by a large friction force acting between both side surfaces of the tilt friction plates 61, 61 and the telescope friction plates 64, 64. A clamp unit according to the embodiment of the invention includes the tilt friction pates 61, 61, the telescope friction plates 64, 64, the fixed cam 53, the movable cam 54, the tightening rod 5, and the operating lever 55.

Thus, the outer column 11 is fixed to the vehicle-body-mounted bracket 3, so that the outer column 11 is prevented from displacing in the tilt direction and the telescopic direction. The outer column 11 is tightened to the vehicle-body-mounted bracket 3 by a large holding force due to the large frictional force acting between the telescope friction plates 64, 64 and the tilt friction plates 61, 61.

Subsequently, when the driver turns the operating lever 55 in a tightening cancellation direction, the side plates 33 and 34 of the vehicle-body-mounted bracket 3, which are set so that the distance therebetween in a free condition is wider than the outside width between the side surfaces 14 and 15 of the distance bracket 13, are elastically restored. Consequently, the frictional force acting between the telescope friction plates 64, 64 and the tilt friction plates 61, 61 is canceled.

Thus, the outer column 11 becomes free from the side plates 33, 34 of the vehicle-body-mounted bracket 3. In this state, the tightening rod 5 is displaced in the tilt direction while guided by the tilt adjustment elongated groove 62 formed in each of the tilt friction plates 61, 61. Consequently, the adjustment in the tilt direction of the steering wheel 121 can optionally be performed.

Also, the outer column 11 is displaced in the telescopic direction along the tightening rod 5 while guided by the telescopic adjustment elongated groove 65 of the telescope friction plate 64 and the telescopic adjustment elongated grooves 16 and 17 of the distance bracket 13. Thus, the adjustment of the steering wheel 121 in the telescopic direction can optionally be performed.

As shown in FIG 3, flange portions 37 and 38 laterally extending from the top plate 32 are formed in the vehicle-body-mounted bracket 3. Substantially-U-shaped notch grooves 39, 39, the vehicle-body-rear-side of each of which is opened, are formed in the flange portions 37, 38. The capsule 42 has an upper sandwiching plate 421 and a lower sandwiching plate 422, which sandwich both the lateral edge portions of the notch groove 39, and is fixed to a mounting surface 411 of the vehicle body 41 by a bolt 43.

The capsule 42 and the flange portions 37, 38 are connected by injection-molding a plurality of resin pins (not shown). At a secondary collision, the resin pins are sheared. Thus, a separation load is generated. The flange portions 37 and 38 (that is, the vehicle-body-mounted bracket 3) get away to the vehicle body front side from the capsule 42 fixed to the vehicle body.

When an automobile collides with another automobile, an impact force, whose magnitude is equal to or larger than a predetermined value, at what is called a secondary collision, at which a driver collides with the steering wheel 121 due to inertia, may act on the outer column 11 upwardly, as viewed in FIGS. 2(1) and 2(2) (to an upward side in the tilt direction). This impact force is transmitted upwardly (to an upward side in the tilt direction), as viewed in FI GS. 2(1) and 2(2), to the tilt friction plate 61 through the telescopic adjustment elongated grooves 16, 17, the tightening rod 5, and the washer 52.

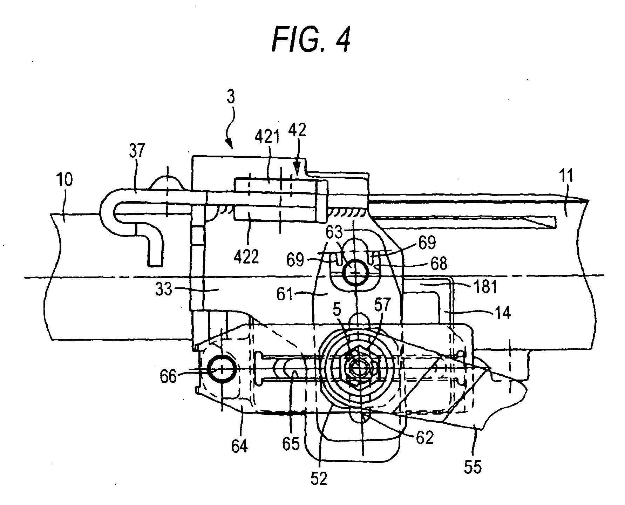

The claw portions 69, 69 of the tilt friction plate 61 are deformed by the impact force and are opened outwardly. The width B1 of the opening portion 671 of the connection hole 67 becomes larger than the diameter of the shank portion 631 of the bolt 63. Thus, the connection from the tilt friction plate 61 to the bolt 63 is canceled. Consequently, as shown in FIG 4, the outer column 11 is moved, together with the tilt friction plate 61, to the vehicle-body-mounted bracket 3 upwardly (to an upward side in the tilt direction), as viewed in FIG 4, so that impact on the driver is alleviated at collision.

The first embodiment is adapted so that the outer column 11 moves upwardly to the vehicle-body-mounted bracket 3(toward an upward side in the tilt direction), as viewed in FIG 4, together with the tilt friction plate 61 to thereby alleviate impact at collision. However, the structure of the apparatus may be adapted so that the outer column 11 can move downwardly (to a downward side in the tilt direction), as viewed in FIG 4, to thereby alleviate impact to a downward side in the tilt direction at collision.
Further, the connection portion of the tilt friction plate may be provided at a lower side of the tightening rod 5 and an upper side of the tilt friction member may be set as a free end.

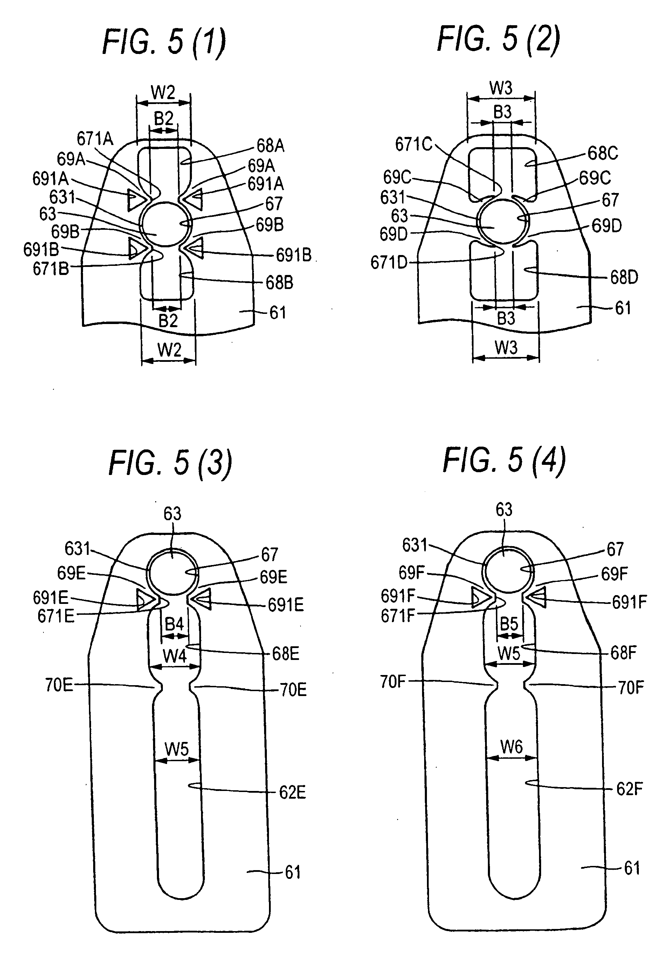

FIGS. 5(1) to 5(4) are front views illustrating modifications of the tilt friction plate 61. The tilt friction plate 61 of the first embodiment has a structure adapted to cancel the connection of the tilt friction plate 61 to the bolt 63 serving as the connection member only when the impact force acts to the upward side in the tilt direction. The modifications illustrated in FIGS. 5(1) and 5(2) employ structures adapted so that the connection of the tilt friction plate 61 to the bolt 63 is canceled not only when an impact force acts to an upward side in the tilt direction, but when an impact force acts to a downward side in the tilt direction.

That is, as shown in FIG 5(1),a connection hole 67, whose diameter is slightly larger than the diameter of the shank portion 631 of the bolt 63, is formed in the top of the tilt friction plate 61. The shank portion 631 of the bolt 63 is fitted into the connection hole 67. Opening portions 671A and 671B are formed in an upper part and a lower part of the connection hole 67, respectively.

The width B2 of each of opening portions 67 1 A and 671B is less than the diameter of the shank portion 631. Relief grooves 68A and 68B, whose width W2 is larger than the diameter of the shank portion 631, are formed in an upper part and a lower part of the connection hole 67. Triangular claw portions 69A, 69A, 69B, 69B are formed between the bottom of the upper relief groove 68A and the opening portion 671 A of the connection hole 67, and the top of the lower relief groove 68B and the opening portion 671B of the connection hole 67.

Triangular holes 691A, 691A, 691B, 691B are bored in the claw portions 69A, 69A, 69B, 69B, respectively. Thus, the claw portions 69A, 69A, 69B, 69B are set to be deformed and outwardly opened by an impact force having a predetermined magnitude.

The tilt friction plate 61 holds the shank portion 631 of the bolt 63 in the connection hole 67 by using the claw portions 69A, 69A, 69B, 69B. When an impact force, whose magnitude is equal to or higher than a predetermined value, acts upwardly, as viewed in FIG 5(1), an impact force directed to an upper part, as viewed in FIG 5(1), also acts upon the tilt friction plate 61.

Then, the lower claw portions 69B, 69B are deformed and are outwardly opened, so that the width B2 of the lower opening portion 671B is larger than the diameter of the shank portion 631, and that the connection of the tilt friction plate 61 to the shank portion 631 is canceled. Consequently, the outer column 11 moves upwardly (to an upward side in the tilt direction), as viewed in FIG 5(1), to the vehicle-body-mounted bracket 3, together with the tilt friction plate 61, to thereby alleviate impact at the collision.

Also, when an impact force, whose magnitude is equal to or higher than a predetermined value, acts downwardly, as viewed in FIG 5(1), on the outer column 11 at collision, an impact force acts downwardly, as viewed in FIG 5(1), to the tilt friction plate 61. Then, the upper claw portions 69A, 69A are deformed and are outwardly opened, so that the width B2 of the upper opening portion 671 A is larger than the diameter of the shank portion 63, and that the connection of the tilt friction plate 61 to the shank portion 631 is canceled.

Consequently, the outer column 1 moves downwardly (toward a downward side in the tilt direction), as viewed in FIG 5(1), together with the tilt friction plate 61, to the vehicle-body-mounted bracket 3 thereby to alleviate impact at the collision. Thus, in response to any of an impact force acting toward an upper side in the tilt direction and an impact force acting toward a downward side in the tilt direction, the connection of the tilt friction plate 61 to the shank portion 631 is canceled. Consequently, impact at the collision can be alleviated.

FIG 5(2) shows a modification of the friction plate shown in FIG 5(1), which is obtained by changing the shapes of the claw portion and the relief groove. That is, similarly to the friction plate shown in FIG 5(1), opening portions 671C and 671D are formed in an upper part and a lower part of the connection hole 67, respectively.

The width B3 of each of the opening portions 671C and 671D is smaller than the diameter of the shank portion 631. Relief grooves 68C and 68D, whose width W3 is larger than the diameter of the shank portion 631 and is also larger than the width W2 of each of the relief grooves 68A and 68B shown in FIG 5(1), are formed in the upper part and the lower part of the connection hole 67. Narrow claw portions 69C, 69C, 69D, 69D are formed between the bottom of the upper relief groove 68C and the opening portion 671C of the connection hole 67 and between the top of the lower relief groove 68D and the opening portion 671D of the connection hole 67.

The claw portions 69C, 69C, 69D, 69D are formed so that the width of the claw portions 69C, 69C, 69D, 69D is narrower than the width of the claw portions 69A, 69A, 69B, 69B shown in FIG 5(1). Thus, even when the triangular holes 691A, 691A, 691B, 691B were not formed, the claw portions 69C and 69D are set by an impact force, whose magnitude has a predetermined value, to be deformed and to be outwardly opened.

The tilt friction plate 61 holds the shank portion 631 of the bolt 63 in the connection hole 67 by using the claw portions 69C, 69C, 69D, 69D. Additionally, when an impact force, whose magnitude is equal to or larger than a predetermined value, acts toward an upper part, as viewed in FIG 5(2), to the outer column 11 at collision, an impact force directed toward an upper part, as viewed in FIG 5(2), also acts on the tilt friction plate 61.

Then, the lower claw portions 69D, 69D are deformed and are outwardly opened, so that the width B3 of the lower opening portion 671D is larger than the diameter of the shank portion 631, and that the connection of the tilt friction plate 61 to the shank portion 631 is canceled. Consequently, the outer column 11 moves upwardly (to an upward side in the tilt direction), as viewed in FIG 5(2), to the vehicle-body-mounted bracket 3, together with the tilt friction plate 61, to thereby alleviate impact at the collision.

Also, when an impact force, whose magnitude is equal to or higher than a predetermined value, acts downwardly, as viewed in FIG 5(2), on the outer column 11 at collision, an impact force acts downwardly, as viewed in FIG 5(1), to the tilt friction plate 61. Then, the upper claw portions 69C, 69C are deformed and are outwardly opened, so that the width B3 of the upper opening portion 671C is larger than the diameter of the shank portion 63, and that the connection of the tilt friction plate 61 to the shank portion 631 is canceled.

Consequently, the outer column 1 moves downwardly (toward a downward side in the tilt direction), as viewed in FIG 5(2), together with the tilt friction plate 61, to the vehicle-body-mounted bracket 3 thereby to alleviate impact at the collision. Thus, in response to any of an impact force acting toward an upper side in the tilt direction and an impact force acting toward a downward side in the tilt direction, the connection of the tilt friction plate 61 to the shank portion 631 is canceled. Consequently, impact at the collision can be alleviated.

According to the first embodiment, the relief groove and the tilt adjustment elongated groove shown in FIGS. 5(1) and 5(2) are formed by being divided in the tilt direction. FIGS. 5(3) and 5(4) illustrate an example of continuously forming the tilt adjustment elongated groove and the relief groove for the bolt 63.

That is, as shown in FIGS. 5(3) and 5(4), the connection hole 67, whose diameter is slightly larger than the diameter of the shank portion 631 of the bolt 63, is formed in the top of the tilt friction plate 61. The shank portion 631 of the bolt 63 is fitted into the connection hole 67. Thus, in the modification shown in FIG 5(3), an opening portion 671E is formed under the connection hole 67. In the modification shown in FIG 5(4), an opening portion 671F is formed in the lower portion of the connection hole 67.

The width B4 of the opening portion 671E, and the width B5 of the opening portion 671F are smaller than the diameter of the shank portion 631. Also, in the modification shown in FIG 5(3), a relief groove 68E, whose width W4 is larger than the diameter of the shank portion 631, is formed under the connection hole 67. A tilt adjustment elongated groove 62E having a width W5 is continuously formed under the relief groove 68E. Triangular claw portions 69E, 69E are formed between the top of the relief groove 68E and the opening portion 671E of the connection hole 67.

Triangular holes 691E, 691E are formed in the claw portions 69E and 69E which are set so that the claw portions 69E and 69E are deformed by a predetermined impact force and are outwardly opened. Triangular tilt stoppers 70E, 70E are formed between the bottom of the relief groove 68E and the top of the tilt adjustment elongated groove 62E. At tilt adjustment, the tilt stoppers abut against the tightening rod 5. Thus, the tilt stoppers 70E, 70E function as upper stoppers arranged in the tilt direction.

Also, in the modification shown in FIG 5(4), a relief groove 68F, whose width W6 is larger than the diameter of the shank portion 631, is formed under the connection hole 67. A tilt adjustment elongated groove 62F having the same width W6 as that of the relief groove 68F is continuously formed under the relief groove 68F. Triangular claw portions 69F, 69F are formed between the top of the relief groove 68F and the opening portion 671F of the connection hole 67.

Triangular holes 691F, 691F are formed in the claw portions 69F and 69F which are set so that the claw portions 69F and 69F are deformed by a predetermined impact force and are outwardly opened. Triangular tilt stoppers 70F, 70F are formed between the bottom of the relief groove 68F and the top of the tilt adjustment elongated groove 62F.

The tilt friction plate 61 holds the shank portion 631 of the bolt 63 in the connection hole 67 by using the claw portions 69E, 69E, 69F, 69F. Additionally, when an impact force, whose magnitude is equal to or larger than a predetermined value, acts toward an upper part, as viewed in FIGS. 5(3) and 5(4), to the outer column 11 at collision, an impact force directed toward an upper part also acts on the tilt friction plate 61.

Then, the claw portions 69E, 69E, 69F, 69F are deformed and are outwardly opened, so that the width B4 of the lower opening portion 671E and the width B5 of the lower opening portion 671F are larger than the diameter of the shank portion 631, and that the connection of the tilt friction plate 61 to the shank portion 631 is canceled. Consequently, the outer column 11 moves upwardly (to an upward side in the tilt direction), as viewed in FIGS. 5(3) and 5(4), to the vehicle-body-mounted bracket 3, together with the tilt friction plate 61, to thereby alleviate impact at the collision.

Thus, in the case of the modifications shown in FIGS. 5(3) and 5(4), the relief grooves 68E and 68F for the bolt 63, and the tilt adjustment elongated grooves 62E and 62F are continuously formed. Thus, the shape of the grooves is simplified. The manufacturing cost thereof can be reduced. Additionally, in the modification shown in FIG 5(4), the width of the relief groove 68F is set to be equal to the width of the tilt adjustment elongated groove 62F. Thus, the shape thereof is simplified still more.

In the modifications shown in FIGS. 5(3) and 5(4), tilt stoppers 70E, 70E formed between the bottom of the relief groove 68E and the top of the tilt adjustment elongated groove 62E, and tilt stoppers 70F, 70F formed between the bottom of the relief groove 68F and the top of the tilt adjustment elongated groove 62F are divided in the width direction. However, the tilt stoppers may be connected in the width direction.

In the foregoing description of the first embodiment and the modifications shown in FIGS. 5(1) to 5(4), examples of applying the invention to the tilt friction plate 61 have been described. However, the invention may be applied to the telescope friction plate 64. Also, the invention may be applied to both the tilt friction plate 61 and the telescope friction plate 64.
Further, the holes on the friction members 61, 64 may be performed by a press working.

### Second Embodiment

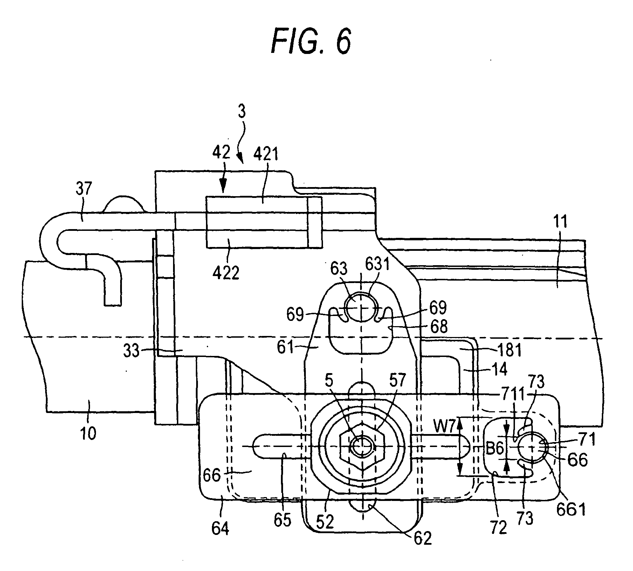

Next, a second embodiment of the invention is described below. FIG 6 is a front view illustrating a primary part of the second embodiment of the steering apparatus according to the invention. In the following description, only constituent elements differing from those of the first embodiment are described. Redundant descriptions are omitted. Additionally, the same reference numeral designates the same component as that of the first embodiment.

The second embodiment is a modification of the first embodiment and enables the cancellation of both the connection between the tilt friction plate 61 and the vehicle-body-mounted bracket 3 and the connection between the telescope friction plate 64 and the outer column 11.

That is, as shown in FIG 6, the structure of the connection portion between the tilt friction plate 61 and the bolt 63 is the same as that of the first embodiment. Therefore, the description of the structure of the connection portion therebetween is omitted. Thus, the structure of the connection portion between the telescope friction plate 64 and the bolt 66 is described below. A connection hole 71, which has a diameter slightly larger than the diameter of the shank portion 661 of the bolt 66 and which is opened in the left end (vehicle-body-front-side), is formed in the right end (vehicle-body-rear-side) of the telescope friction plate 64. The shank portion 661 of the bolt 66 is fitted into the connection hole 71.

The width B6 of the left opening portion 711 of the connection hole 71 is smaller than the diameter of the shank portion 661. Also, a relief groove 72, whose width W7 is larger than the diameter of the shank portion 661, is formed at the left side of the connection hole 71. Narrow claw portions 73, 73 are formed between the right end of the relief groove 72 and the opening portion 711 of the connection hole 71.

The telescope friction plate 64 holds the shank portion 661 of the bolt 66 in the connection hole 71 by using the claw portions 73, 73. Also, when an impact force, whose magnitude is equal to or more than a predetermined value, acts on the outer column 11 at collision and toward the left part in FIG 6, an impact force directed to the left side, as viewed in FIG 6, also acts on the shank portion 661 of the bolt 66.

Then, the claw portions 73, 73 are deformed and are outwardly opened, so that the width B6 of the opening portion 711 is larger than the diameter of the shank portion 661. The connection of the telescope friction plate 64 to the shank portion 661 (the connection of the outer column 11 to the telescope friction plate 64) is canceled. Consequently, the outer column 11 is enabled to move toward the left side (a frontward side in the telescopic direction), as viewed in FIG 6, and to the vehicle-body-mounted bracket 3.

When an automobile collides with another automobile, an impact force, whose magnitude is equal to or larger than a predetermined value, at what is called the secondary collision, at which a driver collides with the steering wheel 121 due to inertia, may act on the outer column 11 upwardly, as viewed in FIG 6 (to an upward side in the tilt direction), and act to the left side, as viewed in FIG 6. This impact force is transmitted upwardly, as viewed in FI G 6 (to an upward side in the tilt direction), to the tilt friction plate 61 through the telescopic adjustment elongated grooves 16, 17, the tightening rod 5, and the washer 52. Simultaneously, an impact force acting to the left side, as viewed in FIG 6, is also transmitted to the shank portion 661 of the bolt 66.

The claw portions 69, 69 of the tilt friction plate 61 are deformed and are outwardly opened by this impact force, so that the connection of the tilt friction plate 61 to the bolt 63 is canceled. Substantially simultaneously, the claw portions 73, 73 of the telescope friction plate 64 are deformed and are outwardly opened by the impact force, so that the connection of the telescope friction plate 64 to the shank portion 661 is canceled.

Consequently, the outer column 11 is moved, together with the tilt friction plate 61, to the vehicle-body-mounted bracket 3 upwardly (to an upward side in the tilt direction), as viewed in FIG 6, and also, the outer column 11 is moved to the left side (to a front side in the telescopic direction), as viewed in FIG 6, and to the vehicle-body-mounted bracket 3, so that impact on the driver is alleviated at collision.

Consequently, according to the second embodiment, in response to both of an impact force acting in the tilt direction and an impact force acting in the telescopic direction, impact at collision can be alleviated.

### Third Embodiment

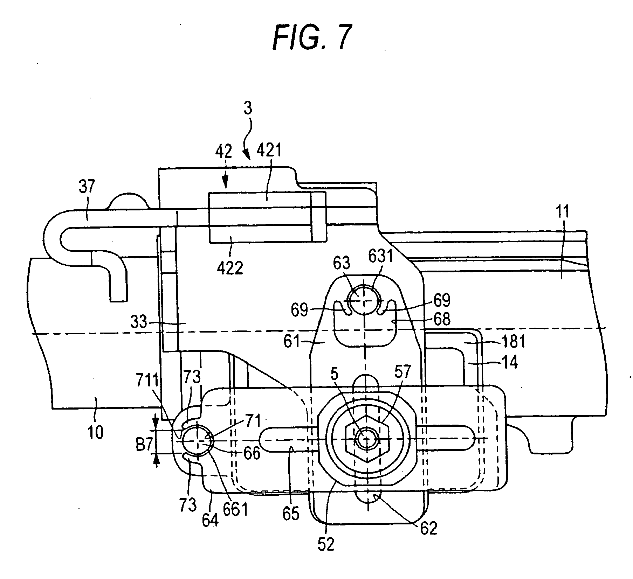

Next, a third embodiment of the invention is described below. FIG 7 is a front view illustrating a primary part of the third embodiment of the steering apparatus according to the invention. In the following description, only constituent elements differing from those of the above embodiments are described. Redundant descriptions are omitted. Additionally, the same reference numeral designates the same component as that of the first embodiment.

Similarly to the second embodiment, the third embodiment enables the cancellation of both the connection between the tilt friction plate 61 and the vehicle-body-mounted bracket 3 and the connection between the telescope friction plate 64 and the outer column 11. The third embodiment differs from the second embodiment in that the structure of the connection portion between the telescope friction plate 64 and the outer column 11.

That is, as shown in FIG 7, the structure of the connection portion between the tilt friction plate 61 and the bolt 63 is the same as those of the first embodiment and the second embodiment. Therefore, the description of the structure of the connection portion therebetween is omitted. The structure of the connection portion between the telescope friction plate 64 and the bolt 66 is described below. A connection hole 71, which has a diameter slightly larger than the diameter of the shank portion 661 of the bolt 66 and which is opened in the left end (vehicle-body-front-side), is formed in the left end (vehicle-body-front-side) of the telescope friction plate 64. The shank portion 661 of the bolt 66 is fitted into the connection hole 71.

The width B7 of the left opening portion 711 of the connection hole 71 is smaller than the diameter of the shank portion 661. Also, in the surrounding of the connection hole 71, narrow claw portions 73, 73 are formed between the left end of the telescope friction plate 64 and the opening portion 711 of the connection hole 71.

The telescope friction plate 64 holds the shank portion 661 of the bolt 66 in the connection hole 71 by using the claw portions 73, 73. Also, when an impact force, whose magnitude is equal to or more than a predetermined value, acts on the outer column 11 at collision and toward the left part in FIG 7, an impact force directed to the left side, as viewed in FIG 7, also acts on the shank portion 661 of the bolt 66.

Then, the claw portions 73, 73 are deformed and are outwardly opened, so that the width B7 of the opening portion 711 is larger than the diameter of the shank portion 661. The connection of the telescope friction plate 64 to the shank portion 661 (the connection of the outer column 11 to the telescope friction plate 64) is canceled. Consequently, the outer column 11 is enabled to move toward the left side (a frontward side in the telescopic direction), as viewed in FIG 7, and to the vehicle-body-mounted bracket 3.

When an automobile collides with another automobile, an impact force, whose magnitude is equal to or larger than a predetermined value, at what is called the secondary collision, at which a driver collides with the steering wheel 121 due to inertia, may act on the outer column 11 upwardly, as viewed in FIG 7 (to an upward side in the tilt direction), and act to the left side, as viewed in FIG 7. This impact force is transmitted upwardly, as viewed in FI G 7 (to an upward side in the tilt direction), to the tilt friction plate 61 through the telescopic adjustment elongated grooves 16, 17, the tightening rod 5, and the washer 52. Simultaneously, an impact force acting to the left side, as viewed in FIG 7, is also transmitted to the shank portion 661 of the bolt 66.

The claw portions 69, 69 of the tilt friction plate 61 are deformed and are outwardly opened by this impact force, so that the connection of the tilt friction plate 61 to the bolt 63 is canceled. Substantially simultaneously, the claw portions 73, 73 of the telescope friction plate 64 are deformed and are outwardly opened by the impact force, so that the connection of the telescope friction plate 64 to the shank portion 661 is canceled.

Consequently, the outer column 11 is moved, together with the tilt friction plate 61, to the vehicle-body-mounted bracket 3 upwardly (to an upward side in the tilt direction), as viewed in FIG 7, and also, the outer column 11 is moved to the left side (to a front side in the telescopic direction), as viewed in FIG 7, and to the vehicle-body-mounted bracket 3, so that impact on the driver is alleviated at collision.

Consequently, according to the third embodiment, in response to both of an impact force acting in the tilt direction and an impact force acting in the telescopic direction, impact at collision can be alleviated. Also, the third embodiment eliminates the need for the relief groove. Thus, the shape of the telescope friction plate 64 can be simplified still more.

Although the second embodiment and the third embodiment are adapted so that the vehicle-body-mounted bracket 3 is demounted from the capsule 42 to the front side of the vehicle body at the secondary collision, the demounting of the vehicle-body-mounted bracket 3 from the capsule 42 is not necessarily performed. In a case where the demounting of the vehicle-body-mounted bracket 3 from the capsule 42 is performed, the connection of the telescope friction plate 64 to the shank portion 661 is canceled before the vehicle-body-mounted bracket 3 is demounted therefrom. Subsequently, the vehicle-body-mounted bracket 3 is demounted from the capsule 42.

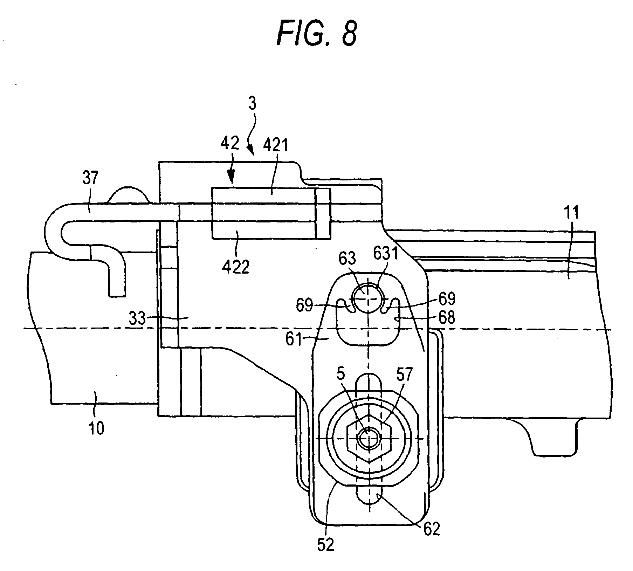

Next, a fourth embodiment of the invention is described below. FIG 8 is a front view illustrating a primary part of the fourth embodiment of the steering apparatus according to the invention. In the following description, only constituent elements differing from those of the above embodiments are described. Redundant descriptions are omitted. Additionally, the same reference numeral designates the same component as that of the first embodiment.

The fourth embodiment is an example of applying the invention to a steering apparatus enabling only the adjustment of the tilt position. No telescope friction plate is provided in the fourth embodiment. The fourth embodiment is adapted so that only the connection between the tilt friction plate 61 and the vehicle-body-mounted bracket 3 is canceled.

That is, as shown in FIG 8, the structure of the connection portion between the tilt friction plate 61 and the bolt 63 is the same as that of the first embodiment. The telescope friction plate 64 as provided in the first embodiment is omitted. Instead, a plurality (3 in the present embodiment) of washers 52 are disposed therein so that the washer 52 and the tilt friction plate 61 are alternately provided.

When an automobile collides with another automobile, an impact force, whose magnitude is equal to or larger than a predetermined value, at what is called the secondary collision, at which a driver collides with the steering wheel 121 due to inertia, may act on the outer column 11 upwardly, as viewed in FIG 8 (to an upward side in the tilt direction). This impact force is transmitted upwardly, as viewed in FI G 8 (to an upward side in the tilt direction), to the tilt friction plate 61 through the tightening rod 5, and the washers 52.

The claw portions 69, 69 of the tilt friction plate 61 are deformed and are outwardly opened by this impact force, so that the connection of the tilt friction plate 61 to the bolt 63 is canceled. Consequently, the outer column 11 is moved, together with the tilt friction plate 61, to the vehicle-body-mounted bracket 3 upwardly (to an upward side in the tilt direction), as viewed in FIG 8, so that impact on the driver is alleviated at collision.

The foregoing description of the fourth embodiment has described the example of applying the invention to the steering apparatus enabled to adjust only the tilt position. However, the invention may be applied to a steering apparatus enabled to adjust only the telescopic position.

In the above embodiments, the connection between the friction plate and the bolt serving as the connection member is canceled at the collision by deformation of the friction-plate-side claw portion. However, the connection therebetween may be canceled by deformation of the connection member. Additionally, the connection between the friction plate and the connection member may be canceled at the collision by fracture of the friction-plate-side claw portion, which is caused after the deformation thereof, or by fracture of the connection member, which is caused after the deformation thereof. Further, it is also adaptable that by making the connection members from a material, which is easily fractured such as resin, so that when the collision load is applied to the connection member, the connection member is fractured so as to cancel the connection.

Additionally, the foregoing description of the embodiments has described the examples of applying the invention to the tilt/telescope type steering apparatus. However, the invention may be applied to a steering apparatus enabled to adjust only one of the tilt position and the telescopic position.
While there has been described in connection with the preferred embodiments of the present invention, it will be obvious to those skilled in the art that various changes and modification may be made therein without departing from the present invention, and it is aimed, therefore, to cover in the appended claim all such changes and modifications as fall within the scope of the present invention.

## Claims

1. A steering apparatus comprising:
a vehicle-body-mounted bracket (3) mountable in a vehicle body;
a steering shaft (12) to which a steering wheel (121) is attached;
a column (1) which is supported by the vehicle-body-mounted bracket (3) so that a position thereof is adjustable, and rotatably supports the steering shaft (12); and
a clamp unit that clamps the column (2) to the vehicle-body-mounted bracket (3) through a first friction plate (61) and a second friction plate (64), which slide-contact with the first friction plate (61), at the desired position; and
a connection member connecting the first and second friction plates (61, 64) with at least one of the vehicle-body-mounted bracket (3) and the column (1),
**characterized in that**, when an impact force, whose magnitude is equal to or more than a predetermined value, acts at a collision, connection of the first friction plate to at least one of the vehicle-body-mounted bracket (3) and the column (1) is canceled.

2. A steering apparatus comprising:
a vehicle-body-mounted bracket (3) mountable in a vehicle body;
a steering shaft (12) to which a steering wheel (121) is attached;
a column (1) which is supported by the vehicle-body-mounted bracket (3) so that a tilt position thereof is adjustable, and rotatably supports the steering shaft (12); and
a clamp unit that clamps the column (1) to the vehicle-body-mounted bracket (3) through a tilt friction plate (61) at a desired tilt position; and
a connection member connecting the tilt friction plate (61) with the vehicle-body-mounted bracket (3),
**characterized in that**, when an impact force, whose magnitude is equal to or more than a predetermined value, acts at a collision, connection of the tilt friction plate (61) to the vehicle-body-mounted bracket (3) is canceled, so that the column (1) moves together with the tilt friction plate in a tilt direction relative to the vehicle-body-mounted bracket (3).

3. A steering apparatus comprising:
a vehicle-body-mounted bracket (3) mountable in a vehicle body;
a steering shaft (12) to which a steering wheel (121) is attached;
a column (1) which is supported by the vehicle-body-mounted bracket (3) so that a telescopic position thereof is adjustable, and rotatably supports the steering shaft (12); and
a clamp unit that clamps the column (1) to the vehicle-body-mounted bracket (3) through a telescopic friction plate (64) at a desired telescopic position; and
a connection member connecting the telescopic friction plate (64) with the column (1),
**characterized in that**, when an impact force, whose magnitude is equal to or more than a predetermined value, acts at a collision, connection of the telescopic friction plate (64) to the column (1) is canceled, so that the column (1) moves in a telescopic direction relative to the vehicle-body-mounted bracket (3).

4. A steering apparatus comprising:
a vehicle-body-mounted bracket (3) mountable in a vehicle body;
a steering shaft (12) to which a steering wheel (121) is attached;
a column (1) which is supported by the vehicle-body-mounted bracket (3) so that both of a tilt position and a telescopic position thereof are adjustable, and rotatably supports the steering shaft (12);
a clamp unit that clamps the column (1) to the vehicle-body-mounted bracket (3) through a tilt friction plate (61) and a telescope friction plate (64) at a desired tilt position and at a desired telescopic position;
a first connection member connecting the tilt friction plate (61) with the vehicle-body-mounted bracket (3); and
a second connection member connecting the telescopic friction plate (64) with the column (1),
**characterized in that**, when an impact force, whose magnitude is equal to or more than a predetermined value, acts at a collision, connection of the tilt friction plate (61) to the vehicle-body-mounted bracket (3) is canceled, and connection of the telescope friction plate (64) to the column (1) is canceled, so that the column (1) moves together with the tilt friction plate (61) in a tilt direction relative to the vehicle-body-mounted bracket (3), and that the column (1) moves in a telescopic direction relative to the vehicle-body-mounted bracket (3).

5. A steering apparatus comprising:
a vehicle-body-mounted bracket (3) mountable in a vehicle body;
a steering shaft (12) to which a steering wheel (121) is attached;
a column (1) which is supported by the vehicle-body-mounted bracket (3) so that both of a tilt position and a telescopic position thereof are adjustable, and rotatably supports the steering shaft (12);
a clamp unit that clamps the column (1) to the vehicle-body-mounted bracket (3) through a tilt friction plate (61) and a telescope friction plate (64) at a desired tilt position and at a desired telescopic position;
a first connection member connecting the tilt friction plate (61) with the vehicle-body-mounted bracket (3), and
a second connection member connecting the telescopic friction plate (64) with the column (1),
**characterized in that**, when an impact force, whose magnitude is equal to or more than a predetermined value, acts at a collision, at least one of connection of the tilt friction plate (61) to the vehicle-body-mounted bracket (3) and connection of the telescope friction plate (64) to the column (1) is canceled, so that the column (1) moves together with the tilt friction plate (61) in a tilt direction relative to the vehicle-body-mounted bracket (3), or that the column (1) moves in a telescopic direction relative to the vehicle-body-mounted bracket (3).

6. The steering apparatus according to one of claims 1 to 5, wherein at the collision, the connection of the tilt friction plate (61) to the vehicle-body-mounted bracket (3) or the connection of the telescope friction plate (64) to the column (1) is canceled by deformation of the tilt friction plate (61) or the telescope friction plate (64).

7. The steering apparatus according to one of claims 1 to 5, wherein at the collision, the connection of the tilt friction plate (61) to the vehicle-body-mounted bracket (3) or the connection of the telescope friction plate (64) to the column (1) is canceled by deformation of the connection member.

8. The steering apparatus according to one of claims 1 to 5, wherein the vehicle-body-mounted bracket (3) is mountable in the vehicle body so that when an impact force, whose magnitude is equal to or more than a predetermined value, acts at a secondary collision, the vehicle-body-mounted bracket (3) is movable toward a front of the vehicle body.

## Patentansprüche

1. Lenkvorrichtung, die umfasst:
eine Halterung (3) zur Montage an der Fahrzeugkarosserie, die in einer Fahrzeugkarosserie montiert werden kann;
eine Lenkwelle (12), an der ein Lenkrad (121) angebracht ist;
eine Säule (1), die von der Halterung (3) zur Montage an der Fahrzeugkarosserie so getragen wird, dass eine Position derselben verstellt werden kann, und die die Lenkwelle (12) drehbar trägt; und
eine Klemmeinheit, die die Säule (11) über eine erste Reibplatte (61) und eine zweite Reibplatte (64), die in Gleitkontakt mit der ersten Reibplatte (61) ist, an der gewünschten Position an der Halterung (3) zur Montage an der Fahrzeugkarosserie festklemmt; und
ein Verbindungselement, das die erste und die zweite Reibplatte (61, 64) wenigstens mit der Halterung (3) zur Montage an der Fahrzeugkarosserie oder der Säule (1) verbindet,
**dadurch gekennzeichnet, dass**
wenn eine Aufprallkraft, deren Stärke auf einem vorgegebenen Wert oder darüber liegt, bei einer Kollision wirkt, Verbindung der ersten Reibplatte mit wenigstens der Halterung (3) zur Anbringung an der Fahrzeugkarosserie und der Säule (1) aufgehoben wird.

2. Lenkvorrichtung, die umfasst:
eine Halterung (3) zur Montage an der Fahrzeugkarosserie, die in einer Fahrzeugkarosserie montiert werden kann;
eine Lenkwelle (12), an der ein Lenkrad (121) angebracht ist;
eine Säule (1), die von der Halterung zur Montage an der Fahrzeugkarosserie so getragen wird, dass eine Neigungsposition derselben verstellt werden kann, und die die Lenkwelle (12) drehbar trägt; und
eine Klemmeinheit, die die Säule (1) über eine Neigungs-Reibplatte (61) in einer gewünschten Neigungsposition an der Halterung (3) zur Montage an der Fahrzeugkarosserie festklemmt; und
ein Verbindungselement, das die Neigungs-Reibplatte (61) mit der Halterung (3) zur Montage an der Fahrzeugkarosserie verbindet,
**dadurch gekennzeichnet, dass**
wenn eine Aufprallkraft, deren Stärke auf einem vorgegebenen Wert oder darüber liegt, bei einer Kollision wirkt, Verbindung der Neigungs-Reibplatte (61) mit der Halterung (3) zur Montage an der Fahrzeugkarosserie aufgehoben wird, so dass sich die Säule (1) zusammen mit der Neigungs-Reibplatte in einer Neigungsrichtung relativ zu der Halterung (3) zur Montage an der Fahrzeugkarosserie bewegt.

3. Lenkvorrichtung, die umfasst:
eine Halterung (3) zur Anbringung an einer Fahrzeugkarosserie, die in einer Fahrzeugkarosserie montiert werden kann;
eine Lenkwelle (12), an der ein Lenkrad (121) angebracht ist;
eine Säule (1), die von der Halterung (3) zur Montage an der Fahrzeugkarosserie so getragen wird, dass eine Teleskop-Position derselben verstellt werden kann, und die die Lenkwelle (12) drehbar trägt; und
eine Klemmeinheit, die die Säule (1) über eine Teleskop-Reibplatte (64) an einer gewünschten Teleskop-Position an der Halterung (3) zur Montage an der Fahrzeugkarosserie festklemmt; und
ein Verbindungselement, das die Teleskop-Reibplatte (64) mit der Säule (1) verbindet,
**dadurch gekennzeichnet, dass**
wenn eine Aufprallkraft, deren Stärke auf einem vorgegebenen Wert oder darüber liegt, bei einer Kollision wirkt, Verbindung der Teleskop-Reibplatte (64) mit der Säule aufgehoben wird, so dass sich die Säule in einer Teleskop-Richtung relativ zu der Halterung (3) zur Montage an der Fahrzeugkarosserie bewegt.

4. Lenkvorrichtung, die umfasst:
eine Halterung (3) zur Montage an einer Fahrzeugkarosserie, die in einer Fahrzeugkarosserie montiert werden kann;
eine Lenkwelle (12), an der ein Lenkrad (121) angebracht ist;
eine Säule (1), die von der Halterung (3) zur Montage an der Fahrzeugkarosserie so getragen wird, dass sowohl eine Neigungsposition als auch eine Teleskop-Position derselben verstellt werden können, und die die Lenkwelle (12) drehbar trägt;
eine Klemmeinheit, die die Säule (1) über eine Neigungs-Reibplatte (61) und eine Teleskop-Reibplatte (64) an einer gewünschten Neigungsposition und einer gewünschten Teleskop-Position an der Säule (1) festklemmt;
ein erstes Verbindungselement, das die Neigungs-Reibplatte (61) mit der Halterung (3) zur Montage an der Fahrzeugkarosserie verbindet; und
ein zweites Verbindungselement, das die Teleskop-Reibplatte (64) mit der Säule (1) verbindet;
**dadurch gekennzeichnet, dass**
wenn eine Aufprallkraft, deren Stärke auf einem vorgegebenen Wert oder darüber liegt, bei einer Kollision wirkt, Verbindung der Neigungs-Reibplatte (61) mit der Halterung (3) zur Montage an der Fahrzeugkarosserie aufgehoben wird, und Verbindung der Teleskop-Reibplatte (64) mit der Säule (1) aufgehoben wird, so dass sich die Säule (1) zusammen mit der Neigungs-Reibplatte (61) in einer Neigungsrichtung relativ zu der Halterung (3) zur Montage an der Fahrzeugkarosserie bewegt und dass sich die Säule (1) in einer Teleskop-Richtung relativ zu der Halterung (3) zur Montage an der Fahrzeugkarosserie bewegt.

5. Lenkvorrichtung, die umfasst:
eine Halterung (3) zur Montage an einer Fahrzeugkarosserie, die an einer Fahrzeugkarosserie montiert werden kann;
eine Lenkwelle (12), an der ein Lenkrad (121) angebracht ist;
eine Säule (1), die von der Halterung (3) zur Montage an der Fahrzeugkarosserie so getragen wird, dass sowohl eine Neigungsposition als auch eine Teleskop-Position derselben verstellt werden können, und die die Lenkwelle (12) drehbar trägt;
eine Klemmeinheit, die die Lenksäule (1) über eine Neigungs-Reibplatte (61) und eine Teleskop-Reibplatte (64) an einer gewünschten Neigungs-Position und einer gewünschten Teleskop-Position an der Halterung (3) zur Montage an der Fahrzeugkarosserie festklemmt;
ein erstes Verbindungselement, das die Neigungs-Reibplatte (61) mit der Halterung (3) zur Montage an der Fahrzeugkarosserie verbindet; und
ein zweites Verbindungselement, das die Teleskop-Reibplatte (64) mit der Säule (1) verbindet;
**dadurch gekennzeichnet, dass**
wenn eine Aufprallkraft, deren Stärke auf einem vorgegebenen Wert oder darüber liegt, bei einer Kollision wirkt, wenigstens die Verbindung der Neigungs-Reibplatte (61) mit der Halterung (3) zur Montage an der Fahrzeugkarosserie oder die Verbindung der Teleskop-Reibplatte (64) mit der Säule (1) aufgehoben wird, so dass sich die Säule (1) zusammen mit der Neigungs-Reibplatte (61) in einer Neigungs-Richtung relativ zu der Halterung (3) zur Montage an der Fahrzeugkarosserie bewegt oder sich die Säule (1) in einer Teleskop-Richtung relativ zu der Halterung (3) zur Montage an der Fahrzeugkarosserie bewegt.

6. Lenkvorrichtung nach einem der Ansprüche 1 bis 5, wobei bei der Kollision die Verbindung der Neigungs-Reibplatte (61) mit der Halterung (3) zur Montage an der Fahrzeugkarosserie oder die Verbindung der Teleskop-Reibplatte (64) mit der Säule (1) durch die Verformung der Neigungs-Reibplatte (61) oder der Teleskop-Reibplatte (64) aufgehoben wird.

7. Lenkvorrichtung nach einem der Ansprüche 1 bis 5, wobei bei der Kollision die Verbindung der Neigungs-Reibplatte (61) mit der Halterung (3) zur Montage an der Fahrzeugkarosserie oder die Verbindung der Teleskop-Reibplatte (64) mit der Säule (1) durch die Verformung des Verbindungselementes aufgehoben wird.

8. Lenkvorrichtung nach einem der Ansprüche 1 bis 5, wobei die Halterung (3) zur Montage an der Fahrzeugkarosserie so in der Fahrzeugkarosserie montiert werden kann, dass, wenn eine Aufprallkraft, deren Stärke auf einem vorgegebenen Wert oder darüber liegt, bei einer sekundären Kollision wirkt, die Halterung (3) zur Montage an der Fahrzeugkarosserie auf eine Vorderseite der Fahrzeugkarosserie zu bewegt werden kann.

## Revendications

1. Direction comportant :
un support monté sur une carrosserie de véhicule (3) pouvant être monté dans une carrosserie de véhicule ;
un arbre de direction (12) sur lequel est fixé un volant de direction (121) ;
une colonne (1) qui est supportée par le support monté sur une carrosserie de véhicule (3) de telle sorte qu'une position de celle-ci est réglable, et supporte de façon rotative l'arbre de direction (12) ; et
une unité de serrage qui serre la colonne (1) sur le support monté sur une carrosserie de véhicule (3) par l'intermédiaire d'une première plaque de friction (61) et d'une deuxième plaque de friction (64), qui est en contact coulissant avec la première plaque de friction (61), dans la position souhaitée ; et
un élément de raccordement reliant les première et deuxième plaques de friction (61, 64) à au moins le support monté sur une carrosserie de véhicule (3) ou la colonne (1),
**caractérisée en ce que**, lorsqu'une force d'impact, dont la grandeur est égale ou supérieure à une valeur prédéterminée, agit au moment d'une collision, le raccordement de la première plaque de friction à au moins le support monté sur une carrosserie de véhicule (3) ou la colonne (1) est annulé.

2. Direction comportant :
un support monté sur une carrosserie de véhicule (3) pouvant être monté dans une carrosserie de véhicule ;
un arbre de direction (12) sur lequel est fixé un volant de direction (121) ;
une colonne (1) qui est supportée par le support monté sur une carrosserie de véhicule (3) de telle sorte qu'une position d'inclinaison de celle-ci est réglable, et supporte de façon rotative l'arbre de direction (12) ; et
une unité de serrage qui serre la colonne (1) sur le support monté sur une carrosserie de véhicule (3) par l'intermédiaire d'une plaque de friction d'inclinaison (61) dans une position d'inclinaison souhaitée ; et
un élément de raccordement reliant la plaque de friction d'inclinaison (61) au support monté sur une carrosserie de véhicule (3),
**caractérisée en ce que**, lorsqu'une force d'impact, dont la grandeur est égale ou supérieure à une valeur prédéterminée, agit au moment d'une collision, le raccordement de la plaque de friction d'inclinaison (61) au support monté sur une carrosserie de véhicule (3) est annulé, de telle sorte que la colonne (1) se déplace avec la plaque de friction d'inclinaison dans une direction d'inclinaison par rapport au support monté sur une carrosserie de véhicule (3).

3. Direction comportant :
un support monté sur une carrosserie de véhicule (3) pouvant être monté dans une carrosserie de véhicule ;
un arbre de direction (12) sur lequel est fixé un volant de direction (121) ;
une colonne (1) qui est supportée par le support monté sur une carrosserie de véhicule (3) de telle sorte qu'une position télescopique de celle-ci est réglable, et supporte de façon rotative l'arbre de direction (12) ; et
une unité de serrage qui serre la colonne (1) sur le support monté sur une carrosserie de véhicule (3) par l'intermédiaire d'une plaque de friction télescopique (64) dans une position télescopique souhaitée ; et
un élément de raccordement reliant la plaque de friction télescopique (64) à la colonne (1),
**caractérisée en ce que**, lorsqu'une force d'impact, dont la grandeur est égale ou supérieure à une valeur prédéterminée, agit au moment d'une collision, le raccordement de la plaque de friction télescopique (64) à la colonne (1) est annulé, de telle sorte que la colonne (1) se déplace dans une direction télescopique par rapport au support monté sur une carrosserie de véhicule (3).

4. Direction comportant :
un support monté sur une carrosserie de véhicule (3) pouvant être monté dans une carrosserie de véhicule ;
un arbre de direction (12) sur lequel est fixé un volant de direction (121) ;
une colonne (1) qui est supportée par le support monté sur une carrosserie de véhicule (3) de telle sorte qu'une position d'inclinaison et une position télescopique de celle-ci sont toutes les deux réglables, et supporte de façon rotative l'arbre de direction (12) ;
une unité de serrage qui serre la colonne (1) sur le support monté sur une carrosserie de véhicule (3) par l'intermédiaire d'une plaque de friction d'inclinaison (61) et d'une plaque de friction télescopique (64) dans une position d'inclinaison souhaitée et dans une position télescopique souhaitée ;
un premier élément de raccordement reliant la plaque de friction d'inclinaison (61) au support monté sur une carrosserie de véhicule (3) ; et
un deuxième élément de raccordement reliant la plaque de friction télescopique (64) à la colonne (1),
**caractérisée en ce que**, lorsqu'une force d'impact, dont la grandeur est égale ou supérieure à une valeur prédéterminée, agit au moment d'une collision, le raccordement de la plaque de friction d'inclinaison (61) au support monté sur une carrosserie de véhicule (3) est annulé, et le raccordement de la plaque de friction télescopique (64) à la colonne (1) est annulé, de telle sorte que la colonne (1) se déplace avec la plaque de friction d'inclinaison (61) dans une direction d'inclinaison par rapport au support monté sur une carrosserie de véhicule (3), et que la colonne (1) se déplace dans une direction télescopique par rapport au support monté sur une carrosserie de véhicule (3).

5. Direction comportant :
un support monté sur une carrosserie de véhicule (3) pouvant être monté dans une carrosserie de véhicule ;
un arbre de direction (12) sur lequel est fixé un volant de direction (121) ;
une colonne (1) qui est supportée par le support monté sur une carrosserie de véhicule (3) de telle sorte qu'une position d'inclinaison et une position télescopique de celle-ci sont toutes les deux réglables, et supporte de façon rotative l'arbre de direction (12) ;
une unité de serrage qui serre la colonne (1) sur le support monté sur une carrosserie de véhicule (3) par l'intermédiaire d'une plaque de friction d'inclinaison (61) et d'une plaque de friction télescopique (64) dans une position d'inclinaison souhaitée et dans une position télescopique souhaitée ;
un premier élément de raccordement reliant la plaque de friction d'inclinaison (61) au support monté sur une carrosserie de véhicule (3) ; et
un deuxième élément de raccordement reliant la plaque de friction télescopique (64) à la colonne (1),
**caractérisée en ce que**, lorsqu'une force d'impact, dont la grandeur est égale ou supérieure à une valeur prédéterminée, agit au moment d'une collision, au moins le raccordement de la plaque de friction d'inclinaison (61) au support monté sur une carrosserie de véhicule (3) ou le raccordement de la plaque de friction télescopique (64) à la colonne (1) est annulé, de telle sorte que la colonne (1) se déplace avec la plaque de friction d'inclinaison (61) dans une direction d'inclinaison par rapport au support monté sur une carrosserie de véhicule (3), ou que la colonne (1) se déplace dans une direction télescopique par rapport au support monté sur une carrosserie de véhicule (3).

6. Direction selon l'une des revendications 1 à 5, dans laquelle, au moment de la collision, le raccordement de la plaque de friction d'inclinaison (61) au support monté sur une carrosserie de véhicule (3) ou le raccordement de la plaque de friction télescopique (64) à la colonne (1) est annulé par déformation de la plaque de friction d'inclinaison (61) ou de la plaque de friction télescopique (64).

7. Direction selon l'une des revendications 1 à 5, dans laquelle, au moment de la collision, le raccordement de la plaque de friction d'inclinaison (61) au support monté sur une carrosserie de véhicule (3) ou le raccordement de la plaque de friction télescopique (64) à la colonne (1) est annulé par déformation de l'élément de raccordement.

8. Direction selon l'une des revendications 1 à 5, dans laquelle le support monté sur une carrosserie de véhicule (3) peut être monté dans la carrosserie de véhicule de telle sorte que, lorsqu'une force d'impact, dont la grandeur est égale ou supérieure à une valeur prédéterminée, agit au moment d'une collision secondaire, le support monté sur une carrosserie de véhicule (3) est mobile vers l'avant de la carrosserie de véhicule.
